# EUROPEAN PATENT APPLICATION

(11) **EP 3 637 089 A1**
(43) Date of publication of application: **15.04.2020**
(21) Application number: 18199631.5
(22) Date of filing: 10.10.2018
(51) Int. Cl.: G01N 21/25, G01N 21/27, G01J 3/02, D06F 39/00, F25D 29/00, G01N 21/359

(54) **SCANNING DEVICE WITH ATTACHING MEANS**

(71) Applicant: BSH Hausgeräte GmbH, 81739 München (DE)
(72) Inventor: Sagoo, Kiran Pal, 82256 Fürstenfeldbruck (DE)

(57) **Abstract**

A handheld scanning device (110) for determining spectral data regarding an item (111) is described. The scanning device (110) comprises a scanning head (210) with a spectral sensor (201) which is configured to determine spectral data regarding an item (111) that is placed in front of the spectral sensor (201). Furthermore, the scanning device (110) comprises a handle (220) enabling a user to grab the scanning device (110) with a hand. In addition, the scanning device (110) comprises a first magnetic element (211) arranged near the scanning head (210) and a second magnetic element (221) arranged near the handle (220), wherein the first and second magnetic elements (211, 221) are each configured to generate a magnetic field. The first and second magnetic elements (211, 221) are dimensioned such that the scanning device (110) can be attached to a metallic surface or magnetic surface (230).

## Description

The present document relates to a mobile and/or handheld scanning device, which is configured to determine spectral data regarding a scanned item, such as a clothing item or a food item. In particular, the present document relates to a scheme for securely attaching a scanning device to an appliance and/or surface.

Household appliances, such as a washing machine, a dishwasher or a refrigerator, may be operated in different operation modes or may comprise different compartments for storing different types of items that may be placed within the household appliance. By way of example, the washing program which is used by a washing machine to obtain optimal washing results is typically dependent on the type of clothing items that are placed within the washing machine. In a similar manner, a refrigerator may comprise different compartments for storing food items, wherein the climatic conditions, notably the temperature, of the different compartments may be optimal for different types of food items.

A scanning device may be used to scan a clothing item for determining the composition of the clothing item and/or for detecting a stain. Furthermore, washing instructions may be provided to a washing machine in dependence of the scan data. Such a scanning device may also be used to scan food items, medicine and/or drinks.

A user typically makes use of a scanning device in an intermittent manner. By way of example, a user may hold the scanning device to scan an item, and may subsequently control the user interface of an appliance (e.g. a washing machine) to process the scanned item. Hence, during the use of a scanning device, a user may need to pick up and to put down the scanning device repeatedly.

The present document addresses the technical problem of increasing the comfort of use of a scanning device. Furthermore, the present document is directed at the technical problem of increasing the reliability of a scanning device. The technical problem is solved by the independent claim. Preferred examples are described in the dependent claims. According to an aspect, a handheld and/or mobile scanning device for determining spectral data regarding an item, notably a clothing or textile item and/or a food item, is described. The scanning device may be configured to be held in the hand of a user. In particular, the scanning device may be designed such that a user may bring the scanning device into proximity of an item (and/or vice versa) to perform a scanning process for determining spectral data regarding the item. The spectral data may then be used to determine property information regarding the item, such as information regarding the physical composition of the item.

The scanning device may comprise a spectral sensor which is configured to determine spectral data regarding an item that is placed in front of the spectral sensor. The spectral data may comprise and/or may depend on a reflection and/or an absorption spectrum of the item. In particular, the spectral data may be indicative of the energy of absorbed and/or reflected electromagnetic radiation as a function of wavelength. The spectral sensor may be or may comprise a near infrared sensor.

The scanning device may comprise a housing, wherein the housing may form a handle and a measuring or scanning head. The spectral sensor may be positioned in or at the measuring head. The housing may have a form similar to a pistol or a handheld barcode scanner or a showerhead. The handle may enable a user to grab the scanning device with a hand.

In addition, the scanning device typically comprises a control unit (e.g. a microprocessor). The control unit is configured control a scanning process of the spectral sensor for determining spectral data regarding an item. Furthermore, the control unit may be configured to control a household appliance for operation in conjunction with a scanned item, based on the spectral data for the scanned item.

Furthermore, the scanning device comprises a first magnetic element which is arranged near and/or at the scanning head and a second magnetic element which is arranged near and/or at the handle. The first and second magnetic elements may each be configured to generate a magnetic field. In a preferred example, the first and/or second magnetic elements are permanent magnets.

The first and second magnetic elements are dimensioned such that the scanning device can be attached to a metallic surface or magnetic surface, notably to a magnetic surface which extends perpendicular to ground (i.e. at an angle of 90° or more with regards to ground). On the other hand, the first and second magnetic elements are preferably dimensioned such that the scanning device can be detached from the metallic surface or magnetic surface using forces that can be generated (comfortably) by a user's hand. In a preferred example, the magnetic surface is part of a housing, notably part of a (metallic) side wall of the housing, of a household appliance.

Hence, a scanning device is provided which comprises (at least) two magnetic elements that allow the scanning device to be attached to and/or detached from a metallic surface or magnetic surface (notably a household appliance) in a comfortable manner. By doing this, the comfort of using a scanning device can be improved. Furthermore, the risk of damaging the (spectral sensor of the) scanning device can be reduced.

The scanning device may comprise a removable cap that can be attached to the scanning head (e.g. using a clicking, snapping or latching connection), in order to cover (and protect) the spectral sensor, and that can be removed from the scanning head prior to using the scanning device for determining spectral data regarding an item. The cap may comprise silicon and/or rubber.

The cap may be used to protect the spectral sensor, when storing the scanning device. The first magnetic element may be attached to the cap (and by consequence, the first magnetic element may be attached indirectly to the scanning head, when the cap is attached to the scanning head). As a result of integrating the first magnetic element within the cap, a user may be forced to cover the spectral sensor using the cap prior to attaching the scanning device to a metallic surface or magnetic surface, thereby reducing the risk of damaging the (spectral sensor of the) scanning device.

The first and second magnetic elements may be dimensioned such that the scanning device cannot be attached to the metallic surface or magnetic surface using the second magnetic element without the first magnetic element. In other words, the first and second magnetic elements may be dimensioned such that a stable stance of the scanning device can only be achieved when using the first magnetic element (possibly in addition to the second magnetic element). By doing this, the probability that a user covers the spectral sensor using the cap can be further increased.

The cap may exhibit spectral properties which are known to the control unit of the scanning device. The control unit may be configured to cause the spectral sensor to determine spectral data regarding the cap, when the cap covers the spectral sensor. Furthermore, the control unit may be configured to calibrate the spectral sensor based on the spectral data regarding the cap and based on the known spectral properties of the cap. Such a calibration process may be repeated (e.g. subsequent to certain time intervals (such as 3 months) and/or subsequent to a pre-determined number of scanning operations). By making use of the cap for calibration purposes, a high scanning quality can be maintained in an automatic and efficient manner.

The scanning device may be formed such that the scanning head and the handle both exhibit a contact point with a planar surface, especially the metallic surface or magnetic surface. The first magnetic element may be positioned at the contact point of the scanning head, and the second magnetic element may be positioned at the contact point of the handle. As a result of this, the scanning device can be attached to the metallic surface or magnetic surface in a reliable manner.

According to a further aspect, the invention comprises a Household Appliance, especially a Laundry Care Machine or Refrigerator, comprising a magnetic surface configured for the attachment of the above described scanning device. Thus, the household appliance is configured to provide an excellent landing spot (or point of attachment) for the scanning device.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
- Figure 1: shows an example system for determining property information regarding items that are to be placed within a household appliance;
- Figure 2a: shows an example spectral scanning device used for scanning a clothing item;
- Figure 2b: shows an example spectral scanning device comprising magnetic elements;
- Figure 2c: shows an example spectral scanning device comprising a cap; and
- Figure 2d: shows an example spectral scanning device which is attached to a magnetic surface.

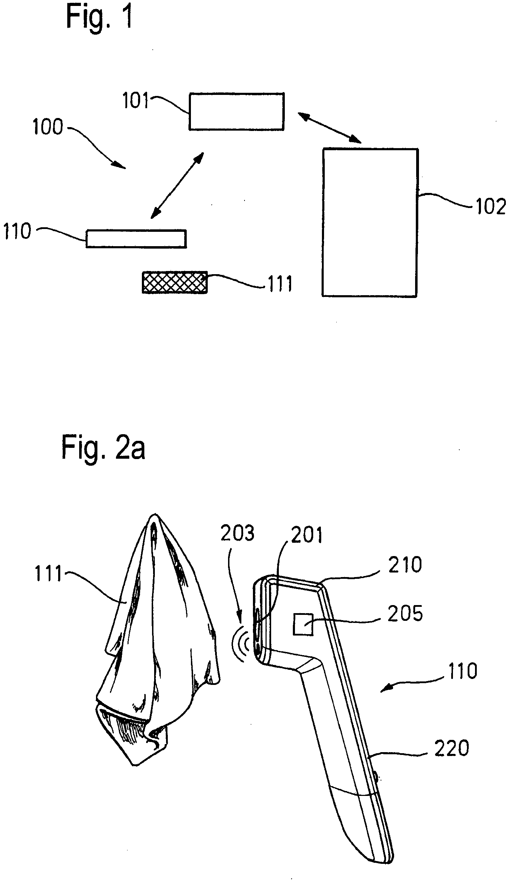

As outlined above, the present document is directed at increasing the comfort and the reliability of a scanning device which may be used by a user to determine property information regarding an item. Fig. 1 shows a system 100 for determining property information regarding the properties of one or more items 111. The system 100 comprises a mobile and/or handheld scanning device 110 which may be used by a user to scan an item 111, e.g. a clothing item or a food item. In particular, the scanning device 110 may be configured to determine spectral data regarding an item 111, notably an absorption spectrum and/or a reflection spectrum of an item 111.

The spectral data of an item 111 may be provided to an evaluation unit 101 (e.g. via a wired and/or wireless communication network). The evaluation unit 101 may be configured to determine property information based on the spectral data. In particular, the evaluation unit 101 may be configured to determine information regarding a composition of the item 111. By way of example, the evaluation unit 101 may be configured to determine the one or more textiles (e.g. cotton, wool, a synthetic textile, etc.) comprised within a clothing item. In another example, the evaluation unit 101 may be configured to determine the one or more ingredients comprised within a food item.

By way of example, the evaluation unit 101 may comprise or may have access to a database, wherein the database comprises a machine-learned classifier which is configured to determine property information based on the scanned spectral data of an item 111. The database may be a chemometrics database, which comprises and/or stores chemical information regarding different materials (e.g. at a molecular level). Alternatively or in addition, the evaluation unit 101, notably the classifier, may be configured to determine an operation mode for a household appliance 102 based on the spectral data. In an example, the evaluation unit 101 is comprised within the scanning device 110.

The evaluation unit 101 may be configured to provide the property information and/or information regarding the determined operation mode to a household appliance 102 (e.g. via a wired and/or wireless communication network). The property information may be used to select an operation mode of the household appliance 102. By way of example, the washing temperature of a washing machine may be selected based on the property information of the one or more clothing items 111 that are to be processed by the washing machine. In another example, the property information may be used to select an appropriate compartment of a refrigerator for storing a food item 111.

Hence, a scanning device 110 may provide support to a user with regards to the operation of a household appliance 102 in conjunction with one or more items 111. The process for scanning an item 111 may consist in placing the item 111 in proximity of the scanning device 110 (e.g. within 5 cm, 3cm, 2cm, 1 cm or less of the scanning device 110, notably between 2-3cm of the scanning device 110). Once the item 111 is correctly placed, a control button of the scanning device 110 may need to be pressed, in order to initiate the scanning process and the determination of the spectral data. The spectral data may then be evaluated (e.g. by an evaluation unit 101), in order to determine property information regarding the scanned item. The property information may be displayed on a display of the scanning device 110.

Prior to performing a scanning process, it may be required to select an item type from a list of possible item types. Example item types are one or more clothing or textile types, one or more food types, etc. The scanning process may then be performed in dependence of the selected item type.

In many cases (e.g. when filling up a washing machine), a user needs to repeat the above mentioned scanning process several times. In such cases, the scanning device 110 may need to be picked up and laid down by a user in a repeated manner. This may be time consuming and tiring for a user.

Fig. 2a shows a scanning device 110 which comprises a scanning sensor or a spectral sensor 201, e.g. a Near Infrared (NIR) sensor, which is configured to determine the spectral data for an item 111. For this purpose, the scanning sensor 201 may be configured to emit a measurement signal (e.g. a signal spanning a given spectrum, such as the near infrared spectrum). Furthermore, the scanning sensor 201 may be configured to capture a reflected signal of the measurement signal, wherein the reflected signal has been reflected at the item 111. By comparing the spectrum of the measurement signal with the spectrum of the reflected signal, a reflection spectrum of the item 111 may be determined as spectral data, wherein the reflection spectrum is typically indicative of one or more properties of the item 111 (such as the composition of the item 111). The reflection spectrum may indicate the energy of the reflected signal relative to the measurement signal, as a function of wavelength or frequency.

The scanning device 110 may comprise a housing. The scanning sensor 201 may be positioned at a head portion 210 of the housing (also referred to herein at the measuring head). Furthermore, the housing may comprise a handle portion 220 which may form a handle for holding the scanning device 110. In addition, the scanning device 110 may comprise a control unit 205 which is configured to control a scanning process and which may be configured to process the scanning data which is provided by the scanning sensor 201.

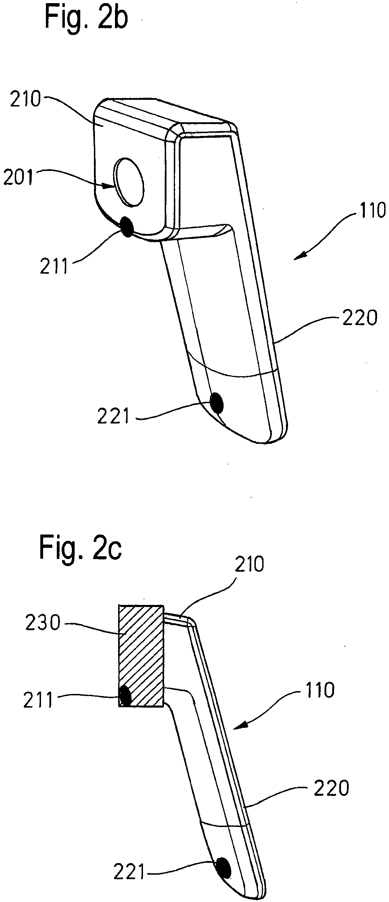

As shown in Fig. 2b, the scanning device 110 may comprise a first magnetic element 211 (e.g. comprising a permanent magnet) which is positioned at or near the head portion 210 of the housing of the scanning device 110. Furthermore, the scanning device 110 comprises a second magnetic element 221 (e.g. comprising a permanent magnet) which is positioned at or near the handle portion 220 of the housing of the scanning device 110. The magnetic elements 211, 221 may be designed such that the magnetic elements 211, 221 allow the scanning device 110 to be attached to a metallic and/or magnetic surface (e.g. to the surface of a household appliance 102). Hence, a user is enabled to comfortably attach the scanning device 110 to a household appliance 102, when the scanning device 110 is not used. Attaching the scanning device 110 to the surface of a household appliance 102 also allows the scanning device 110 to be stored in a safe place (thereby preventing possible damage to the scanning device 110).

The scanning device 110 may be provided with a detachable cap 230 (see Fig. 2c), which may be attached (e.g. clipped) to the measuring head 210 of the scanning device 110. In particular, the cap 230 may be used to cover the scanning sensor 201 when not using the scanning device 110, thereby protecting the scanning sensor 201.

The cap 230 may exhibit pre-determined spectral properties which may be used for calibrating the scanning sensor 201. Hence, the cap 230 may be used as a calibration cap. For calibration, the cap 230 may be arranged to cover the scanning sensor 201. Subsequent to placing the cap 230 on the measuring head 210 of the scanning device 110, the scanning sensor 201 may be initiated by the control unit 205 to determine scanning data or spectral data. The scanning data or spectral data may be analyzed, and the scanning sensor 201 may be calibrated based on the analysis of the scanning data.

The first magnetic element 211 may be attached to the cap 230. As a result of this, it may be ensured that the scanning device 110 can only be attached to a metallic surface, if the cap 230 is placed over the scanning sensor 201 of the scanning device 110. This ensures a regular calibration of the scanning sensor 201. Furthermore, this ensures that the scanning device 110 is always stored in a safe manner.

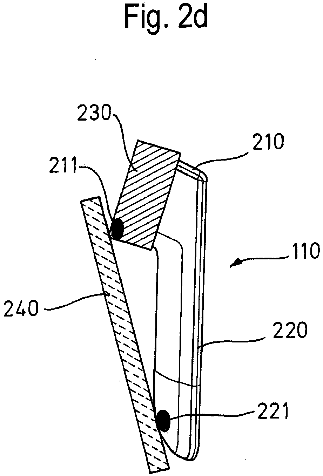

Fig. 2d shows the scanning device 110 which is attached to a metallic surface 240 via the first and second magnetic elements 211, 221.

Hence, (at least or exactly) two magnetic elements 211, 221 may be integrated into the scanning device 110. A first magnetic element 211 may be provided within the calibration cap 230 which covers the scanning sensor 201. A second magnetic element 221 may be provided at the base of the scanning device 110 near the handle 220. The two magnetic elements 211, 221 in combination may provide a stable stance, so that the scanning device 110 may be attached onto any magnetic surface 240 in a comfortable manner. By integrating the first magnetic element 211 into the cap 230, a user may be induced or forced to place the calibration cap 230 onto the scanning device 110 before allowing the user to attach the scanning device 110 safely to a magnetic surface 240. This helps protecting the scanning sensor 201 of a scanning device 110.

The use of magnetic elements 211, 221 allows a scanning device 110 to be attached to an appliance 102 and/or any magnetic surface 240 in a comfortable and efficient manner. The use of a magnetic cap 230 (with a magnetic element 211) forces a user to place the cap 230 onto the device 110 for achieving a stable attaching mechanism, thereby protecting the scanning device 110. The second magnetic element 221 at the end of the scanning device 110 (within the handle area 220) acts as a counter weight to the scanning sensor 201 in the front of the device 110, thereby improving, notably lowering, the center of gravity of the device 110. The improved center of gravity improves handling and usage of the device 110. Placing the first magnetic element 211 within the cap 230 has the additional advantage, that the first magnetic element 211 does not interfere with the relatively sensitive scanning sensor 201, when the device 110 is in operation, thereby improving the scanning results of the device 110. Furthermore, the use of magnetic elements 211, 221 which are integrated within the scanning device 110 makes the use of separate accessories for attaching the device 110 to an appliance 102 obsolete.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A handheld scanning device (110) for determining spectral data regarding an item (111), wherein the scanning device (110) comprises
- a scanning head (210) with a spectral sensor (201) which is configured to determine spectral data regarding an item (111) that is placed in front of the spectral sensor (201);
- a handle (220) enabling a user to grab the scanning device (110) with a hand;and
- a first magnetic element (211) arranged near the scanning head (210) and a second magnetic element (221) arranged near the handle (220); wherein the first and second magnetic elements (211, 221) are each configured to generate a magnetic field; and wherein the first and second magnetic elements (211, 221) are dimensioned such that the scanning device (110) can be attached to a metallic surface or magnetic surface (230).

2. The scanning device (110) of claim 1, wherein
- the scanning device (110) comprises a removable cap (230) that can be attached to the scanning head (210) to cover the spectral sensor (201) and that can be removed from the scanning head (210) prior to using the scanning device (110) for determining spectral data regarding an item (111); and
- the first magnetic element (211) is attached to the cap (230) or part of the cap (230).

3. The scanning device (110) of claim 2, wherein
- the scanning device (110) comprises a control unit (205);
- the cap (230) exhibits spectral properties which are known to the control unit (205); and
- the control unit (205) is configured to
- cause the spectral sensor (201) to determine spectral data regarding the cap (230), when the cap (230) covers the spectral sensor (201); and
- calibrate the spectral sensor (201) based on the spectral data regarding the cap (230) and based on the known spectral properties of the cap (230).

4. The scanning device (110) of any of claims 2 to 3, wherein the cap (230) comprises silicon and/or rubber.

5. The scanning device (110) of any previous claim, wherein the first and second magnetic elements (211, 221) are dimensioned such that the scanning device (110) cannot be attached to the metallic surface or magnetic surface (240) using the second magnetic element (221) without the first magnetic element (211).

6. The scanning device (110) of any previous claim, wherein
- the scanning device (110) is formed such that the scanning head (210) and the handle (220) both exhibit a contact point with a planar surface;
- the first magnetic element (211) is positioned at the contact point of the scanning head (210); and
- the second magnetic element (221) is positioned at the contact point of the handle (220).

7. The scanning device (110) of any previous claim, wherein the first and second magnetic elements (211, 221) are dimensioned such that the scanning device (110) can be attached to a metallic surface or magnetic surface (230) which is perpendicular to ground.

8. The scanning device (110) of any previous claim, wherein the first and second magnetic elements (211, 221) are dimensioned such that the scanning device (110) can be detached from the metallic surface or magnetic surface (240) using forces that can be generated by a user's hand.

9. The scanning device (110) of any previous claim, wherein the magnetic surface (230) is part of a housing, notably part of a side wall of the housing, of a household appliance (102).

10. The scanning device (110) of any previous claim, wherein the first and/or second magnetic elements (211, 221) are permanent magnets.

11. The scanning device (110) of any previous claims, wherein
- the scanning device (110) comprises a control unit (205); and
- the control unit (205) is configured to control a household appliance (102) for operation in conjunction with a scanned item (111), based on the spectral data for the scanned item (111).

12. The scanning device (110) of any previous claims, wherein the spectral sensor (201) comprises a near infrared sensor.

13. Household Appliance (102), especially Laundry Care Machine or Refrigerator, comprising a magnetic surface (230) configured for the attachment of a scanning device (110) according to any of the previous claims.
